# EUROPEAN PATENT SPECIFICATION

(11) **EP 1 005 125 B1**
(45) Date of publication and mention of the grant of the patent: **19.01.2011**
(21) Application number: 99123431.1
(22) Date of filing: 24.11.1999
(51) Int. Cl.: H01T 13/38, C04B 35/111

(54) **Insulator for spark plug and spark plug using the insulator**
Isolator für eine Zündkerze und Zündkerze mit solchem Isolator
Isolateur pour bougie d'allumage et bougie d'allumage comportant cet isolateur

(30) Priority: 24.11.1998 JP 33300198; 19.01.1999 JP 1006299; 22.09.1999 JP 26901799; 22.09.1999 JP 26902499
(43) Date of publication of application: 31.05.2000
(60) Divisional application: 10001714.4
(73) Proprietor: NGK SPARK PLUG CO., LTD, Mizuho-ku Nagoya-shi Aichi (JP)
(72) Inventor: Sugimoto, Makoto, c/o NGK Spark Plug Co., Ltd., Nagoya-shi, Aichi (JP); Tanabe, Hiroyuki, c/o NGK Spark Plug Co., Ltd., Nagoya-shi, Aichi (JP); Ito, Hirohito, c/o NGK Spark Plug Co., Ltd., Nagoya-shi, Aichi (JP); Yamamoto, Yoshihiro, c/o NGK Spark Plug Co., Ltd., Nagoya-shi, Aichi (JP); Matsubara, Katsura, c/o NGK Spark Plug Co., Ltd., Nagoya-shi, Aichi (JP); Tanaka, Kuniharu, c/o NGK Spark Plug Co., Ltd., Nagoya-shi, Aichi (JP); Shimamori, Toru, c/o NGK Spark Plug Co., Ltd., Nagoya-shi, Aichi (JP); Ito, Masaya, c/o NGK Spark Plug Co., Ltd., Nagoya-shi, Aichi (JP)
(74) Representative: Grünecker, Kinkeldey, Stockmair & Schwanhäusser Anwaltssozietät

(56) References cited:
- EP-A- 0 482 897
- EP-A- 0 659 705

## Description

The present invention relates to a spark plug to be used as source for igniting a fuel-air mixture in an internal combustion engine as well as to a method of manufacturing an insulator for a spark plug.

A spark plug used in an internal-combustion engine, such as the engine of an automobile, has conventionally included, as a spark plug insulator (hereinafter referred to simply as an "insulator"), an alumina-based sintered body formed by sintering alumina-based (Al₂O₃) material. The reason for this is that alumina has superior thermal, mechanical, and withstand voltage characteristics. In order to reduce a firing temperature, a three-element sintering auxiliary consisting of; for example, silicon oxide (SiO₂), calcium monoxide (CaO) and magnesium monoxide (MgO), has conventionally been used in manufacture of the insulator (i.e., the alumina-based sintered body).

The spark plug insulator is exposed to a high temperature of about 500 to 700°C under the influence of hot combustion gases (ranging from about 2,000 to 3,000°C) generated by a spark discharge developing in a combustion chamber of the internal-combustion engine. For this reason, the superior withstand voltage characteristic within a range from room temperature to high temperature is important for the spark plug insulator. In recent years, in association with an increase in the power rating and miniaturization of the internal-combustion engines, an increase in the area occupied by an inlet valve or an exhaust valve within the combustion chamber and employment of four valves per cylinder have been contemplated. As a result, the spark plug itself tends to be made more compact (tends to have a smaller diameter). To these ends, there exists demand for reducing the thickness of the insulator. Also, demand exists for the insulator to exhibit a superior withstand voltage characteristic even when exposed to a temperature of about 500 to 700°C.

If the insulator (i.e., the alumina-based sintered body) is formed through use of the above-described three-element sintering auxiliary, after sintering the three-element sintering auxiliary (primarily consisting of Si) exists, as a low-melting-point glass phase, in the grain boundaries of alumina crystal grains. When the thus-produced insulator is exposed to a temperature of about 700°C, the low-melting-point glass phase softens under the influence of the heat. Consequently, the withstand voltage characteristic may be dropped. A conceivable measure to diminish the amount of low-melting-point glass phase is to produce an insulator while reducing merely the amount of the sintering auxiliary used for sintering. However, such a measure may result in a failure to induce close-graining of the insulator, or a plurality of pores remaining in the boundaries of alumina crystal grains even when close-graining of the insulator appears to be in progress. As a result, a drop in the withstand voltage characteristic will arise.

In the event that pores (residual pores) exist in the boundaries of alumina crystal grains or that the grain boundaries of a low-melting-point grain phase (i.e., a low-melting-point glass phase), when the insulator is exposed to a temperature of about 700°C and a high voltage of several tens of kilo-volts is applied to the spark plug so as to cause a spark discharge, the electric field is concentrated on the residual pores existing in the grain boundaries, or the grain phase becomes softened, which may in turn induce insulation breakdown across the insulator (i.e., penetration of a spark).

Raw alumina, which is material for an insulator and is commonly used, is manufactured by the Bayer method (hereinafter the raw material will be called "Bayer-alumina"). In the Bayer method, alumina is extracted from bauxite, which is the chief ore of aluminum, by means of a wet extraction technique. Under this method, a water solution containing a comparatively high concentration of caustic soda (NaOH) is used as an extracting medium. If an insulator is formed chiefly from the Bayer-alumina produced according to the foregoing method, in many cases sodium (Na)(or soda compounds), which is alkaline metal, is unavoidably contained in alumina in the form of NaOH or Na₂O.

Sodium exhibits high ionic conductivity. If an excessive amount of sodium is contained in alumina, an insulator made of such alumina disadvantageously suffers a drop in the withstand voltage characteristic; particularly, the withstand voltage characteristic when the insulator is exposed to a temperature of 300°C or higher, or a drop in mechanical strength.

EP 0 659 705 A1 discloses a sintered ceramic article usable for electric components such as spark plugs and formed mainly of alumina, having a chemical composition of from 1 to 10% by weight of La₂O₃, from 0.01 to 0.1% by weight of SiO₂, and the balance of Al₂O₃ and containing these components In the form of corundum (α-Al₂O₃) and lanthanum β-alumina (La₂O₃·11Al₂O₃ and a method for the production of a aintered ceramic article formed mainly of alumina, comprising the steps of shaping a mixture of Al₂O₃, La₂O₃. and SiO₂, calcining the shaped mixture in the air at a temperature In the range of from 600°C to 1000°C, and further firing the calcined shaped mixture to a temperature in the range of from 1400°C to 1800°C.

It is an objective of the present invention to provide a spark plug having an Insulator (alumina-based sintered body) which prevents breakdown across the insulator under the influence of residual pores existing in grain boundaries formed in the insulator or under the influence of low-melting-point glass phase in the 10 grain boundaries, which exhibits a much superior withstand voltage characteristic when the insulator is exposed to a temperature of about 500 to 700°C, and which is made close-grained.

It is also an objective of the present invention to provide a method of manufacturing an insulator for such a spark plug.

According to the present invention, said objective is solved by a spark plug having the combination of features of independent claim 1.

Accordingly, as long as at least one of rare earth elements is contained in the insulator made of an alumina-based sintered body, the insulator exhibits a superior withstand voltage characteristic at a high temperature of about 700°C. As long as any one of the rare earth elements defined In claim 1 is contained in the insulator (i.e., the alumina-based sintered body), the withstand voltage characteristic of the insulator can be improved. The reason for this is considered that a grain boundary phase containing the rare earth element is produced in the grain boundary constituted of alumina crystal grains, thereby improving the melting point of the grain boundary phase.

The rare earth element being contained in the insulator made of an alumina-based sintered body and setting of a sodium content to a value of 0.05 wt.% or less as reduced to oxides are important. When the sodium content in the insulator (i.e., the alumina-based sintered body) exceeds 0.05 wt.%, ion conductivity induced by sodium ions develops. The withstand voltage characteristic of the insulator, particularly, the withstand voltage characteristic of the insulator at a high temperature of 500°C or more, is deteriorated by the influence of the ion conductivity. Therefore, an improvement in the withstand voltage characteristic of the insulator stemming from containing of an rare earth element can be maintained by limiting the sodium content to the range of 0.05 wt.%. Theoretically, 0 wt.% of sodium is desirable. However, as mentioned previously, alumina is usually manufactured according to the Bayer method, and hence a trace amount of sodium (on the order of nano-grams) are unavoidably contained in alumina.

Further, the theoretical density ratio of the insulator (i.e., the alumina-based sintered body) is set to a value of 95% or more. As a result, the number of residual pores, on which an electric field developing in the alumina crystal boundary is likely to concentrate, is reduced; specifically, the insulator can be made closely grained. Here, the expression "theoretical density" designates a density calculated from the amount of the respective elements constituting the sintered body, as reduced to oxides, according to the rule of mixing. Further, the expression "theoretical density ratio" designates a ratio of the theoretical density to the density of the sintered body measured by the Archimedes method.

More specifically, at least one of rare earth elements is contained in the alumina-based sintered body that constitutes the spark plug insulator, and the sodium content unavoidably contained in alumina is set to a value of 0.05 wt.% or less. Further, the theoretical density ratio of the sintered body is set to a value of 95% or more. The spark plug is superior to a conventional spark plug in view of a withstand voltage characteristic at a high temperature of about 500 to 700°C. Therefore, in a case where the spark plug is applied to a compact spark plug having a thin insulator or a spark plug for use in a high power internal-combustion engine whose combustion chamber is subjected to a high temperature, a problem such as insulation breakdown (or penetration of a spark) can be effectively prevented.

Preferably, the alumina-based sintered body contains 0.01 to 18 wt.% of rare earth elements as reduced to oxides. In view of more effectively improving a withstand voltage characteristic at a high temperature of about 700°C, inclusion of the rare earth element is desirable.

Preferably, the rare earth elements further comprises lanthanum (La) and has at least a crystal phase of rare-earth-element-β-alumina (composition formula: rare-earth-element Al₁₁O18) structure.

The reason why the rare earth elements are limited to La, Pr and Nd is that trivalent ions of rare earth elements other than these elements are assigned smaller ionic radii and hence a crystal phase having a structure of rare-earth-element-β-alumina (hereinafter referred to simply as a "rare-earth-element-β-alumina crystal phase") does not develop in the insulator (alumina-sintered body). The rare-earth-element-β-alumina crystal phase is a high-melting-point crystal phase having a melting point in the vicinity of a temperature of 2000°C. As a result of development of the crystal phase, the withstand voltage characteristic of the insulator at a high temperature of about 700°C can be improved. The place in the insulator where the rare-earth-element-β-alumina crystal phase is to develop is not limited. Preferably, the rare-earth-element-β-alumina crystal phase extends up to the inside of the insulator (i.e., the alumina-based sintered body). More preferably, rare-earth-element-β-alumina crystal phase exists in a two-particle grain boundary and/or a triple point.

In contrast with the JCPDS card for La, a JCPDS card for Pr or Nd with regard to the rare-earth-element-β-alumina is not available. Therefore, rare-earth-element-β-alumina formed from Pr or Nd cannot be directly identified. However, the ionic radii of Pr" and Nd³⁻ are substantially identical with that of La³⁺. Therefore, Pr and Nd exhibit X-ray diffraction spectra analogous to that described in JCPDS card (No. 33-699) relating to rare-earth-element-β-alumina. In order to induce a rare-earth-element-β-alumina crystal phase, rare-earth-element-β-alumina may be added to a raw material as a raw material powder beforehand. However, in this case, the grains exhibit great anisotropic growth during firing treatment, and hence close-graining of the sintered body may be hindered. To prevent such a problem, the crystal phase is desirably developed during a firing treatment.

Preferably, the alumina-based sintered body further contains at least silicon (Si), calcium (Ca), or magnesium (Mg). In such a case, provided that the silicon content is taken as S (unit: wt.%) as reduced to oxides, the calcium content is taken as C (unit: wt.%) as reduced to oxides, and the magnesium content is taken as M (unit: wt.%) as reduced to oxides, the expression S/(S+C+M) ≥ 0.7 is preferably satisfied.

When each of the three elements is contained in the insulator, the element is fused into a liquid phase during firing treatment. In this way, the three elements act as a sintering auxiliaries for promoting close-graining of the insulator (i.e., the alumina-based sintered body); and hence the three elements are effective for making the insulator closely grained. Here, the Si acts as a sintering auxiliary for promoting close-graining of the insulator and exists in the grain boundary of alumina crystal phase as a low-melting-point glass phase. Even when the respective three elements are contained in the insulator, the withstand voltage characteristic of the insulator at a high temperature of about 700°C can be improved by controlling the proportion of Si. The conceivable reason for this is that Si constituting a low-melting-point glass phase in the grain boundary of alumina crystal grain contained in the insulator (i.e., the alumina-based sintered body) generates a high-melting-point phase, such as a glass phase comprising rare-earth-element-Si, in conjunction with the rare-earth element so as to improve the melting point of the grain boundary phase.

Preferably, provided that the silicon content is taken as S (unit: wt.%) as reduced to oxides, the calcium content is taken as C (unit: wt.%) as reduced to oxides, and the magnesium content is taken as M (unit: wt.%) as reduced to oxides, the insulator satisfies the expression 0.95 ≥ S/(S+C+M) ≥ 0.75, so that the insulator for a spark plug having at least a mullite (Al₆Si₂O₁₃) crystal phase as a crystal phase. When respective elements of the three elements are contained in the insulator, the proportion of Si content is controlled so as to fall within a range defined by the expression. As a result, Si produces a high-melting-point crystal phase in conjunction with the rare earth element, thus enabling generation of a mullite crystal phase having a melting point in the vicinity of 1900 °C. The withstand voltage characteristic of the insulator at a high temperature of about 700°C can be improved.

When the proportion of Si is less than a value of 0.75 or exceeds a value of 0.95, generation of a mullite crystal phase is hardly found. Particularly, the proportion of Si is controlled so as to fall with a range defined by expression 0.92≥S/(S+C+M)≥0.78, a mullite crystal phase can be more effectively produced in the insulator (i.e., the alumina-based sintered body). Here, the location in the insulator where a mullite crystal phase exists is not limited particularly. More preferably, a mullite crystal phase exists in a two-particle grain boundary and/or a triple point.

According to the present invention, the aforementioned objectived is solved by a spark plug having the combination of features of independent claim 8.

Accordingly, Si and at least one of rare earth elements are contained in the insulator made of an alumina-based sintered body, the insulator exhibits a superior withstand voltage characteristic at a high temperature of about 700°C. The conceivable reason for this is that Si and rare earth elements are contained in the insulator, these elements act as sintering auxiliaries which are fused during firing treatment and are likely to cause a liquid phase, thus promoting close-graining of the insulator. More specifically, as a result of inclusion of Si content in the insulator, there can be produced a closely-grained insulator having a fewer number of residual pores on which an electric field developing in the alumina crystal boundary is likely to concentrate.

The insulator can be made more closely grained by mixing Si and rare earth elements into the insulator. In this case, setting a theoretical density ratio of the resultant insulator to a value of 95% or more is important. If the theoretical density ratio of the insulator is less than 95%, the withstand voltage characteristic of the insulator at a temperature of about 700°C is deteriorated.

Here, Si acts as a sintering auxiliary for promoting close-graining of the insulator and exists in the grain boundary of alumina crystal phase as a low-melting-point glass phase. In the first aspect, inclusion of rare earth elements of one or more types in the insulator is important. If the rare earth elements are contained in the insulator together with Si, the rare earth elements generate, in conjunction with Si, a high-melting-point phase such as a glass phase comprising rare-earth-element-Si within the grain boundary phase that is formed during firing treatment, thereby improving the melting point of the grain boundary phase. As a result of generation of the high-melting-point phase, softening of the grain boundary phase, which would otherwise be caused at a high temperature of about 700°C, can be prevented or reduced, thereby improving the withstand voltage characteristic of the insulator.

At least one of the rare earth elements defined in claim 8 is contained in the insulator (i.e., the alumina-based sintered body). Accordingly, the melting point of the grain boundary phase is improved, which in turn enables an improvement in the withstand voltage characteristic of the insulator.

Preferably, at least Si and one or more members of rare earth elements are contained in the alumina-based sintered body that constitutes the spark plug insulator, and the theoretical density ratio of the sintered body is set to a value of 95% or more. The spark plug is superior to a conventional spark plug in view of a withstand voltage characteristic at a high temperature of about 700°C. Therefore, in a case where the spark plug is applied to a compact spark plug having a thin insulator or a spark plug for use in a high power internal-combustion engine whose combustion chamber is subjected to a high temperature, a problem such as insulation breakdown (or penetration of a spark) can be effectively prevented.

Preferably, the alumina-based sintered body contains 0.01 to 18 wt.% of rare earth elements as reduced to oxides. In view of more effectively improving a withstand voltage characteristic at a high temperature of about 700°C, includsion of the rare earth element is desirable.

Preferably, the alumina-based sintered body further contains either calcium (Ca) or magnesium (Mg).

In such a case, provided that the silicon content is taken as S (unit:wt.%) as reduced to oxides, the calcium content is taken as C (unit:wt.%) as reduced to oxides, and the magnesium content is taken as M (unit: wt.%), the expression S/(S+C+M) ≥ 0.7 is preferably satisfied.

As in the case of Si, Ca and Mg are melted and induce a liquid phase during firing treatment and act as sintering auxiliaries for promoting close graining of the insulator (i.e., the alumina-based sintered body), thereby improving close graining of the insulator (an improvement in theoretical density ratio of the insulator). In a case where three elements; i.e., Si, Ca, and Mg, are contained in the insulator, the proportion of Si content is controlled so as to fall within a range defined by the expression, Si effectively produces a high-melting-point phase within the grain boundary phase in conjunction with the rare earth element during the firing treatment, thereby improving the withstand voltage characteristic of the insulator.

Preferably, at least a mullite (Al₆Si₂O₁₃) crystal phase is formed by satisfying the expression 0.95 ≥ S/(S+C+M) ≥ 0.75. In a case where the previously-mentioned three elements are contained in the insulator, if the proportion of Si content is controlled so as to fall within a range defined by the expression, Si effectively produces a high-melting-point phase within the grain boundary phase in conjunction with the rare earth element, thus enabling generation of a mullite crystal phase having a melting point in the vicinity of 1900 °C. The withstand voltage characteristic of the insulator at a high temperature of about 700°C can be improved.

When the proportion of Si in the expression is less than a value of 0.75 or exceeds a value of 0.95, generation of a mullite crystal phase is hardly found. Particularly, the proportion of Si is controlled so as to fall with a range defined by expression 0.92≥S/(S+C+M)≥0.78, a mullite crystal phase can be more effectively produced in the insulator (i.e., the alumina-based sintered body). Here, the location in the insulator where a mullite crystal phase exists is not limited particularly. Preferably, the mullite crystal phase exists within the insulator (i.e., the alumina-based inserted body). More preferably, a mullite crystal phase exists in a two-particle grain boundary and/or a triple point.

Preferably, the rare earth elements contained in the insulator include neodymium (Nd). As a result of Nd being contained in the insulator, variations in the values of withstand voltages of a plurality of insulators at a high temperature of about 700°C can be made smaller as compared with those arising in a case where another member of the rare earth elements is included in the insulators. As a result, at the time of mass-production of insulators, insulators having a superior withstand voltage at a high temperature of about 700°C can be reliably produced.

Accordingly, a crystal phase (hereinafter referred to simply as "rare-earth-element-β-alumina crystal phase") of rare-earth-element-β-alumina (composition formula: rare-earth-element Al₁₁O₁₈) structure, which is a high-melting-point crystal phase having a melting point in the vicinity of a temperature of 2000°C, can be produced within the insulator.

The reason for this is that the ionic radius of trivalent ions of Nd is smaller than the ionic radii of other members of the rare earth elements. Therefore, it is thought that Nd produces a high-melting-point crystal phase in conjunction with Si and produces a rare-earth-element-β-alumina crystal phase (i.e., a rare-earth-element Al₁₁O₁₈ crystal phase) in conjunction with Al. As a result of development of the rare-earth-element-β-alumina crystal phase, the withstand voltage characteristic of the insulator can be improved. The place in the insulator where the rare-earth-element-β-alumina crystal phase is to develop is not limited particularly. Preferably, the rare-earth-element-β-alumina crystal phase extends up to the inside of the insulator (i.e., the alumina-based sintered body). More preferably, rare-earth-element-β-alumina crystal phase exists in a two-particle grain boundary and/or a triple point.

Further, the rare-earth-element-β-alumina crystal phase can be produced even when Pr in place of Nd is added to the insulator. However, in consideration of variations in the withstand voltages of insulators, generation of a crystal phase including at least Nd is said to be desirable. Further, in order to induce a rare-earth-element-β-alumina crystal phase, rare-earth-element-β-alumina may be added as a raw material powder beforehand. However, in this case, the grains exhibit great anisotropic growth during firing treatment, and hence close-graining of the sintered body may be hindered. To prevent such a problem, the crystal phase is desirably developed during a firing treatment.

Moreover, the aforementioned objective is solved by a method of manufacturing an insulator having the method steps of independent claim 15.

The mean particle size of the inorganic-based powders is controlled and a molded body is sintered under the foregoing firing conditions, so that reaction (contact) between grains of the powders during the sintering process is improved. Accordingly, a high-melting-point crystal phase can be effectively developed in the resultant insulator. By means of an improvement in reaction between the grains of the powders, the firing shrinkage of the insulator can be improved, and manufacture of a closely-grained insulator having a theoretical density ratio of 95% or more can be effected.

Preferably, there is provided a spark plug according to any one of the previous embodiments comprising: a center electrode extending so as to form an axis; a main metal fitting provided around the center electrode in the radial direction; and a ground electrode whose one end is fixed to the main metal fitting and which is arranged so as to face the center electrode.

As a result, there can be provided a spark plug which shows a superior withstand voltage characteristic at a high temperature of about 700°C and which prevents occurrence of insulation breakdown (penetration of a spark).

Further preferred embodiments of the present invention are laid down in the further subclaims.

In the following, the present invention is explained in greater detail by means of embodiments thereof in conjunction with the accompanying drawings, wherein:
FIG. 1 is a front and cross-sectional view showing the entirety of a spark plug according to one embodiment;
FIGS. 2A and 2B are longitudinal cross-sectional views showing embodiments of a spark plug insulator;
FIG. 3 is an X-ray diffraction chart relating to sample No. 10 containing Nd-β-alumina crystal phase (Al₁₁NdO₁₈);
FIG. 4 is an X-ray diffraction chart relating to sample No. 8 containing mullite crystal phase (Si₂Al₆O₁₃);
FIG. 5 is a schematic representation showing a device for measuring a withstand voltage of each of test pieces at a temperature of 700°C; and
FIG. 6 is a plot showing variations in withstand voltages of test pieces of sample Nos. 25 and 27 according to a second embodiment.

First, preferred embodiments will be described hereinbelow by reference to the accompanying drawings.

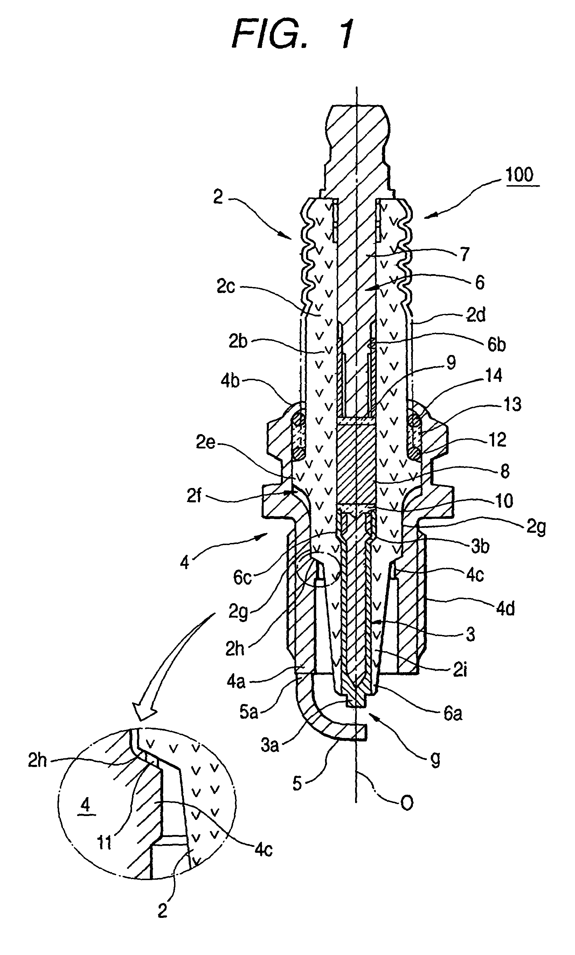

A spark plug 100, which is shown in FIG. 1 includes a center electrode 3 extending so as to form an axis; an insulator 2 provided so as to cover the surroundings of the center electrode 3 with respect to the radial direction; and main metal shell 4 for holding the insulator 2. The main metal shell 4 is made of, for example, carbon steel (JIS-G3507). One end 5a of a ground electrode 5 is welded to one circumferential end of a leading end 4a of the main metal shell 4. The other end of the ground electrode 5 extends to and is bent into a substantially L-shaped form toward the tip end 3a of the center electrode 3, thus defining a predetermined spark gap "g" between the center electrode 3 (i.e., the tip end 3a) and the ground electrode 5.

A through hole 6 is formed in the insulator 2 with respect to the direction O of the center axis of the insulator 2. A terminal electrode 7 is fixedly inserted into one axial end of the through hole 6, and the center electrode 3 is fixedly inserted into the other axial end of the through hole 6. Further, a resistor 8 is arranged between the terminal electrode 7 and the center electrode 3 through the through hole 6. One end of the resistor 8 is electrically connected to the terminal electrode 7, with a conductive glass layer 9 interposed therebetween. The other end of the resistor 8 is electrically connected to the center electrode 3, with a conductive glass layer 10 interposed therebetween. A resistor composition constituting the resistor 8 is made by mixing together glass powder and conductive material powder (along with ceramic powder other than glass powder, as required), and by sintering the resultant mixture by means of hot plate press. Alternatively, the resistor 8 may be omitted, and the center electrode 3 and the terminal electrode 7 may be integrally connected together, with a single-layer conductive glass seal layer sandwiched therebetween.

The through hole 6, into which the center electrode 3 is to be inserted, is formed in the insulator 2 along the direction O of the center axis of the insulator 2. The entirety of the insulator 2 is made of insulation material according to the present teaching. More specifically, the insulation material is made of, as a major constituent, alumina (Al₂O₃); in other words, the insulation material is made of an alumina-based sintered body containing 0.01 to 18 wt.% of one of more rare earth elements as reduced to oxides, and 0.05 wt.% or less sodium (Na) as reduced to oxides. Alternatively, the insulation material is made of, as a major constituent, alumina (Al₂O₃); that is, the alumina-based sintered body contains at least silicon (Si) and one of more types of rare earth elements. Particularly, the alumina-based sintered body contains 0.01 to 18 wt.% rare earth elements as reduced to oxides.

More specifically, as shown in FIG. 1, the insulator 2 is formed such that a protuberance 2e is formed as, for example, a flange, in the intermediate position on the insulator 2 with respect to its axial direction, so as to radially protrude to the outside. Provided that a direction toward the tip end 3a of the center electrode 3 is taken as a "forward direction", the portion of the insulator 2 extending in the rearward direction beyond the protuberance 2e is taken as a main body 2b made slimmer than the protuberance 2e. The forward side of the protuberance 2e is followed by a first axis section 2g, which is slimmer than the protuberance 2e, and a second axis section 2i, which is slimmer than the first axis section 2g, in the sequence given. The outer circumferential surface of the main body 2b is coated with glaze 2d, and corrugations 2c are formed in the outer circumferential surface in the vicinity of the rear end of the main body 2b. The outer circumferential surface of the first axis section 2g is formed into a substantially cylindrical shape, and the outer circumferential surface of the second axis section 2i is formed into a substantially conical shape so as to be tapered toward the tip end 3a.

The through hole 6 formed in the insulator 2 is divided into a substantially cylindrical first portion 6a into which the center electrode 3 is to be inserted, and a second portion 6b which is located rearward of the first portion 6a (i.e., in the upward direction in FIG. 1) and is substantially cylindrically shaped so as to become larger in diameter than the first portion 6a. As shown in FIG. 1, the terminal electrode 7 and the resistor 8 are housed in the second portion 6b, and the center electrode 3 is inserted into the first portion 6a. A protuberance 3b for fixing the electrode 3 is formed on the outer circumferential surface in the vicinity of the rear-end portion of the center electrode 3, so as protrude to the outside. The first portion 6a and the second portion 6b of the through hole 6 are connected together within the first axis section 2g. A protuberance-receiving surface 6c for receiving the protuberance 3b of the center electrode 3 is formed into a tapered or curved surface at the position where the first portion 6a and the second portion 6b meet.

The outer circumferential surface of a connection section 2h located between the first axis section 2g and the second axis section 2i is formed into a stepped shape. A protuberance 4c, which is formed on the interior surface of the main metal shell 4 so as to serve as an engagement section, is engaged with the connection section 2h, with an annular plate packing 11 interposed therebetween, thus preventing dislodgment of the insulator 2 with respect to the axial direction. An annular line packing 12, which engages the rear peripheral edge of the flange-shaped protuberance 2e, is interposed between the interior surface of the opening in the rear portion of the main metal shell 4 and the exterior surface of the insulator 2. An annular line packing 14 is provided in back of the annular line packing 12, with talc powder 13 sandwiched therebetween. The insulator 2 is forcefully inserted into the main metal shell 4 in the forward direction, and the edge of the opening of the main metal shell 4 is caulked inwardly into a curved surface toward the line packing 14, while the insulator 2 is inserted in the main metal shell 4, thus forming a caulked section 4b. The insulator 2 is fixed in the main metal shell 4, by virtue of the caulked section 4b.

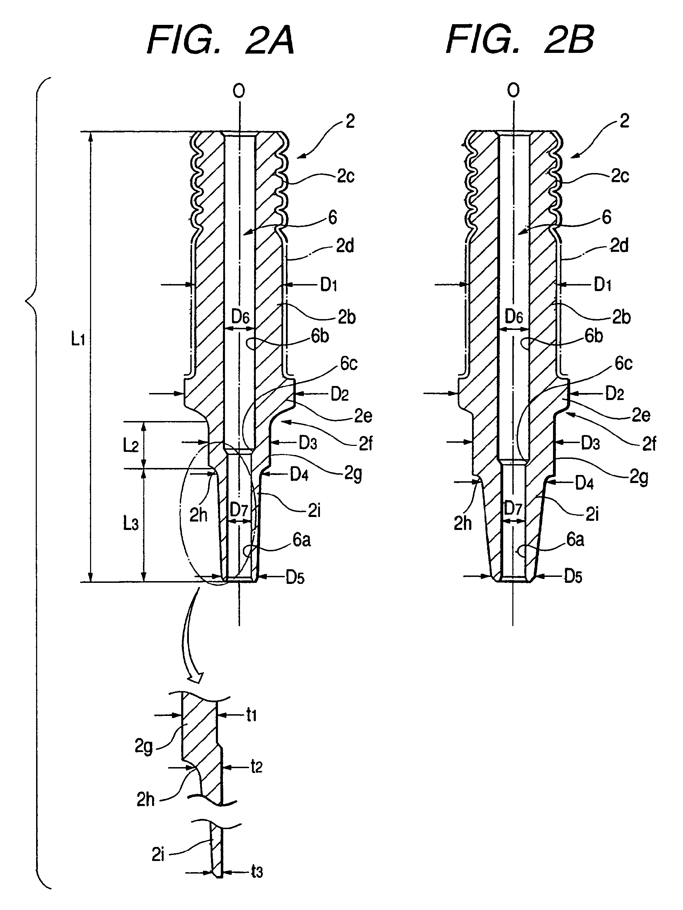

FIGS. 2A and 2B show respective examples of the insulator 2, respectively. The dimensions of individual sections of the insulators 2 are exemplarily defined as below:
- Total length L1: 30 to 75 mm
- Length L2 of the first axis section 2g: 0 to 30 mm (excluding the length of the portion of the connection section 2f extending between the first axis section 2g and the protuberance 2e, but including the length of the portion of the connection section 2h extending between the first axis section 2g and the second axis section 2i)
- Length L3 of the second axis section 2i: 2 to 27 mm
- Outer diameter D1 of the main body 2b: 9 to 13 mm
- Outer diameter D2 of the protuberance 2e: 11 to 16 mm
- Outer diameter D3 of the first axis section 2g: 5 to 11 mm
- Outer diameter D4 of the second axis section 2i: 3 to 8 mm .
- Outer diameter D5 of the tip end of the second axis section 2i (in a case where the outer peripheral edge of the tip end surface is curved or chamfered, the diameter D5 designates the outer diameter of the tip end section at the base end of the curved or chamfered section within the cross section of the tip end including the center axis O): 2.5 to 7 mm
- Inner diameter D6 of the second portion 6b of the through hole 6: 2 to 5 mm
- Inner diameter D7 of the first portion 6a of the through hole 6: 1 to 3.5 mm
- Thickness t1 of the first axis section 2g: 0.5 to 4.5 mm
- Thickness t2 of the base end section of the second axis section 2i (with respect to the direction orthogonal to the center axis O): 0.3 to 3.5 mm
- Thickness t3 of the tip end section of the second axis section 2i (corresponding to a dimension with respect to the direction orthogonal to the center axis O. In a case where the outer peripheral edge of the tip end surface is curved or chamfered, the thickness t3 designates the thickness of the tip end at the base end of the curved or chamfered section within the cross section of the tip end including the center axis O): 0.2 to 3 mm
- Mean thickness tA of the second axis section 2i {(t1+t2)/2}: 0.25 to 3.25 mm

The individual sections of the insulator 2 shown in FIG. 2A have dimensions as shown below: L1 = about 60 mm: L2 = about 10 mm: L3 = about 14 mm: D1 = about 11 mm: D2 = about 13 mm: D3 = about 7.3 mm: D4 = 5.3 mm: D5 = about 4.3 mm: D6 = 3.9 mm: D7 = 2.6 mm: t1 = 1.7 mm: t2 = 1.3 mm: t3 = 0.9 mm: and tA = 1.5 mm.

The first axis section 2g and the second axis section 2i of the insulator 2 shown in FIG. 2B are comparatively longer than those of the insulator 2 shown in FIG. 2A. More specifically, the individual sections of the insulator 2 shown in FIG. 2B have dimensions as shown below: L1 = about 60 mm: L2 = about 10 mm: L3 = about 14 mm: D1 = about 11 mm: D2 = about 13 mm: D3 = about 9.2 mm: D4 = 6.9 mm: D5 = about 5.1 mm: D6 = 3.9 mm: D7 = 2.7 mm: t1 = 3.3 mm: t2 = 2.1 mm: t3 = 1.2 mm: and tA = 2.7 mm.

The insulators 2 are manufactured in, for example, the manner as described below. The Bayer-alumina powder produced according to the Bayer method (the sodium content in 100 wt.% of Bayer-alumina powder assumes a value of 0.07 wt.% or less as reduced to oxides, and the means particle size of the alumina powder is 2.0 µm or less); inorganic-based powders comprising silicon (Si), calcium (Ca), and magnesium (Mg); and rare-earth-element-based powder are mixed and formulated. Further, the mixture is doped with a hydrophilic binder (e.g., polyvinyl alcohol) and water serving as a solvent, thus preparing a base slurry for molding.

Use of alumina powder, which contains 0.07 wt.% or less sodium as reduced to oxides, as raw alumina (Bayer-alumina) powder is important for producing the insulator 2. As a result, the resultant insulator 2 contains 0.05 wt.% or less sodium (a portion of sodium is often lost during sintering). In order to obtain the alumina powder which contains 0.07 wt.% or less sodium as reduced to oxides, the sodium content can be controlled by subjecting the Bayer-alumina manufactured by the Bayer method to predetermined sodium-removal treatment, until a predetermined sodium content is achieved.

Alternatively, the insulators 2 are also manufactured in, for example, the manner as described below. Alumina (Al₂O₃) powder is mixed with inorganic-based powders composed of silicon (Si), calcium (Ca), and magnesium (Mg). Moreover, rare earth elements are added to the resultant mixture. A hydrophilic binder (e.g., polyvinyl alcohol) is added and mixed with the mixture and water serving as a solvent, thus preparing a base slurry for molding.

Alumina powder having a mean particle size of 2 µm or less is preferably used as the major constituent of raw material powder. If the mean particle size exceeds 2 µm, difficulty is encountered in achieving sufficient close-graining of a sintered body, thus resulting in a drop in the withstand voltage characteristic of the insulator. In view of attaining a superior withstand voltage characteristic, alumina powder constituting a raw material powder is preferably prepared such that, after sintering, 100 wt.% of an alumina-based sintered body contains 75. 0 to 99.7 wt.% aluminum as reduced to oxides, whenever necessary.

There is no particular limitation with respect to the type of substance to be used as the rare-earth-element-based powder, so long as the substance can be converted through sintering into an oxide of a rare earth element. For instance, oxides of rare earth elements or composite oxides thereof may be mentioned as examples of the rare-earth-element-based powder. The rare-earth-element-based powder to be added must be controlled and added, as required, such that, after sintering, 100 wt.% of alumina-based sintered body contains 0.01 to 18 wt.% of rare-earth-elements as reduced to oxides. The expression "rare earth elements" encompasses lanthanides ranging from scandium (Sc), yttrium (Y), lanthanum (La), and lutetium (Lu), all of which belong to group IIIA of the periodic table.

Si can be added to the alumina powder in the form of SiO₂ powder; Ca can be added to the same in the form of CaCO₃ powder; and Mg can be added to the same in the form of MgO powder. With regard to the respective members of Si, Ca, and Mg, in addition to use of the oxides of Si, Ca, and Mg, various types of inorganic powder, such as hydroxides, carbonates, chlorides, sulfates, nitrates, and phosphates, may be used (or a composite oxide thereof may be used). In this case, however, inorganic-based powders, which can be oxidized through hot sintering in the atmosphere and can be converted into oxides, must be used as the foregoing inorganic-based powders.

The inorganic-based powder to be added to alumina must be controlled and added, as required, such that the proportion of Si to the total amount of inorganic compounds as reduced to oxides; i.e., an Si content (S measured on a wt.% basis) as reduced to oxides, a Ca content (C measured on a wt.% basis) as reduced to oxides, and a Mg content (M measured on wt.% basis) as reduced to oxides, satisfies the following expression: S/(S+C+M)≥0.7. More preferably, the powder must be controlled so as to satisfy the expression of 0.95≥(S+C+M)≥0.75. Further, the mean particle size of each of the inorganic-based powders preferably assumes a value of 1 µm or less. The mean particle size of each type of the inorganic-based powders falls within the foregoing range, so that reaction (contact) between the alumina powder whose mean particle size is as described above and the rare-earth-element-based powders during the sintering process is considered to be improved. Moreover, the firing shrinkage of the insulator can be improved, and the resultant insulator can be closely grained.

There is no particular limitation with respect to water to be used as a solvent for preparing the base slurry for molding. Hence, water which is the same as that used for forming a conventional insulator can be used. Further, a hydrophilic binder, for example, can be used as the binder, and examples thereof include polyvinyl alcohol (PVA), water-soluble acrylic resin, and dextrin. Of these, PVA is most desirable. No particular limitation is imposed on the method of preparing the base slurry, so that the method enables preparation of a base slurry for molding by mixture of raw power, a binder, and water. Provided that the raw powder is provided in an amount of 100 parts-by-weight, there are mixed 0.1 to 5 parts-by-weight of binder and 40 to 120 parts-by-weight of water; preferably, 0.5 to 3 parts-by-weight of binder and 50 to 100 parts-by-weight of water.

The base slurry is sprayed and dried and prepared into the form of spherical base granule by means of the spray-dray method. The mean particle size of the granules assumes a value of 30 to 200 µm; particularly preferably, a value of 50 to 150 µm. The thus-prepared base granules are subjected to rubber press molding, whereby a press-molded body, which is to act as the precursor of an insulator, is produced. The exterior of the resultant press-molded body is machined through use of a resinoid bonded or a like grindstone. Accordingly, the press-molded body is finished into either of the profiles shown in FIGS. 2A and 2B. The thus-finished body is fired in the atmosphere at a temperature of 1450 to 1650°C for 1 to 8 hours. Thereafter, the thus-sintered body is coated with glaze and is again subjected to final firing, whereby the insulator 2 is formed.

If the firing temperature is lower than 1450°C, an insulator which is sufficiently closely grained cannot be produced in some cases. In contrast, if the firing temperature exceeds 1650°C, alumina crystal grains grow anomalously during firing, as a result of which the mechanical strength of the insulator is likely to drop and coarse pores are likely to arise in the grain boundaries, which would deteriorate the withstand voltage characteristic of the insulator.

With regard to the requirements for firing temperatures, firing of the molded body is preferably carried out for one to eight hours. If the firing time is shorter than one hour, the insulator (i.e., the alumina-based sintered body) may not fully become closely grained. In contrast, if the firing time is longer than eight hours, the alumina crystal grains grow anomalously during firing. In the case of an excessively high firing temperature (1650°C or more), the withstand voltage characteristic of the insulator may be deteriorated. At the time of the insulator being retained within the range of firing temperature, the insulator may be retained for a given period of time while an arbitrary temperature within the range of temperatures is maintained constant, or the firing temperature may be changed according to a predetermined firing pattern within given temperature range.

The operation of the spark plug 100 will now be described. The spark plug 100 is screwed into an engine block by means of a thread section 4d formed on the main metal shell 4 and is taken into the source for firing a fuel-air mixture to be inlet to a combustion chamber. The insulator 2 used in the spark plug 100 is formed from the insulator of the present teaching Therefore, the withstand voltage characteristic of the insulator 2 at a high temperature of 700°C or thereabouts is improved. Even when the spark plug 100 is used for a high power engine whose combustion chamber is exposed to high temperatures, the spark plug 100 is resistant to insulation breakdown (penetration of spark) and can ensure high reliability.

As shown in FIGS. 2A and 2B, in a case where the forward end of the engagement protuberance 2e is followed by an axis section which is slimmer than the protuberance 2e with respect to the radial direction (in this case, the axis section corresponds to the combination of the first axis section 2g and the second axis section 2i), the axis section; for example, the second axis section 2i, is likely to cause insulation breakdown (penetration of a spark). Accordingly, the above insulator is particularly useful as such an insulator 2. For example, in the case of an insulator shown in FIG 2A, the second axis section 2i has a mean thickness tA of 1.5 mm. Even when such a thin portion is formed around the center electrode 3, a problem, such as insulation breakdown (i.e., penetration of a spark), can be effectively prevented or diminished by application of the insulator as discussed above.

The spark plug to which the insulator of the present teaching can be applied is not limited to the type of spark plug shown in FIG. 1. For example, the insulator can be applied to a spark plug, in which the tip ends of a plurality of ground electrodes are arranged so as to face the side surface of the center electrode such that spark gaps are defined between the tip ends and the side surface. In this case, the spark plug may be configured in the form of a semi-surface-gap spark plug, in which the tip end of the insulator is interposed between the side surface of the center electrode and the tip-end surface of the ground electrode. In this type of spark plug, a spark discharge develops across the surface of the tip end of the insulator. Compared with a gas-discharge-type spark plug, the semi-surface-gap spark plug is improved in terms of resistance to stains caused by smoke.

### Examples

### Example 1.

The following tests were performed in order to verify the effects of the present teaching,

Of the alumina (Al₂O₃) powders provided in Table 1 (all of which are more than 99.8% pure), one type of alumina powder was selected from alumina powders No. 1 through No. 6 whose mean particle size range from 0.1 to 2.2 µm. The thus-selected alumina powder was added with SiO₂ powder (which is more than 99.9% pure) having a mean particle size of 0.6 µm, CaCO₃ powder (which is more than 99.9% pure) having a mean particle size of 0.8 µm, and MgO powder (which is more than 99.9% pure) having .. a mean particle size of 0.3 µm. Rare-earth-element oxides (rare-earth-element-based powder) having a mean particle size of 1.0 to 19.0 µm as provided in Table 2 were weighed so as to assume the proportions provided in Table 3. The mixture was further doped with the thus-weighed rare-earth-element-based oxides, thereby preparing a raw material powder. The rare-earth-element-based oxides were formulated with reference to the total amount of alumina, SiO₂, CaCO₃, and MgO powders to be doped, and was added to the mixture.

Provided that the total amount of raw material powder is taken as 100 parts by weight, 2 parts-by-weight of PVA serving as a hydrophilic binder and 70 parts-by-weight of water serving as a solvent were formulated. The PVA and water were mixed with the raw material powder within a bowl of alumina by means of wet mixing, thereby preparing a raw slurry for molding. The thus-prepared raw slurry was sprayed and dried by means of the spray-dry method, thereby preparing spherical base granules. The base granules were sieved to granules having a particle size of 10 to 355 µm. The thus-sieved base granules were charged into a rubber press mold, and a rubber press pin for creating the through hole 6 was inserted into the press mold. In this state, the base granules were subjected to rubber press molding at a pressure of about 100 MPa. The outside of the press-molded body was ground and machined through use of resinoid bonded into a molded body having the shape of a predetermined insulator. Subsequently, the molded body was retained and fired in the atmosphere at a firing temperature provided in Table 3 (the maximum firing temperature to be retained) for two hours. The thus-fired molded body was coated with glaze and subjected to final firing, whereby the insulator 2 shown in FIG. 2A was manufactured.

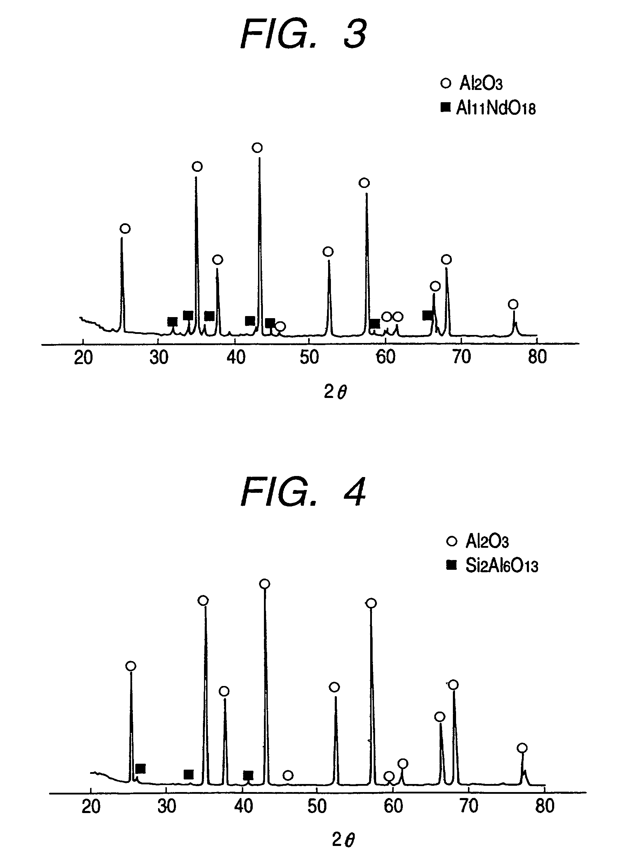

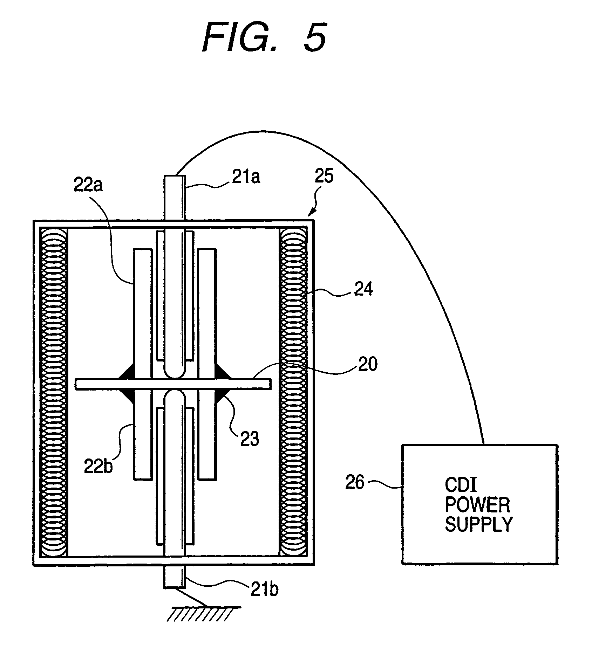

The insulator thus fired was subjected to the following tests and analysis according to the following method: theoretical density ratio; the amount of rare earth elements contained in the insulator as reduced to oxides; the amount of sodium contained in the insulator as reduced to oxides; a value derived from the previously-described expression S/(S+C+M); presence/absence within the insulator of a crystal phase having an rare earth element-β-alumina structure and a mullite crystal phase; a withstand voltage of the insulator at a temperature of 700°C; and a withstand voltage test conducted while the insulator is formed into a spark plug. The test results are shown in Table 4.
(1) Theoretical Density Ratio: The density (relative density) of each of the insulators was measured by the Archimedes method, and the results of measurement were shown in the form of a proportion with respect to the theoretical density obtained according to the rule of mixing.
(2) The amount of rare earth element and the amount of sodium contained in the insulator, as reduced to oxides, were shown as values corresponding to the amount of rare earth element which were detected by analysis of the insulators through fluorescent X-ray spectroscopy and converted into oxides. Of the rare earth elements provided in Table 4, La was converted into La₂O₂; Nd was converted to Nd₂O₃; Dy (dysprosium) was converted into Dy₂O₃; Er (erbium) was converted into Er₂O₃; Sc was converted into Sc₂O₃; Y was converted into Y₂O₃; and Pr was converted into Pr₆O₁₁. The amount of sodium in the insulator as reduced to oxides was represented by the values obtained through chemical analysis of the insulators as reduced to oxides. Here, the sodium contents provided in Table 4 are as reduced to Na₂O.
(3) Values derived from S/(S+C+M): The amounts of Si, Ca, and Mg were determined by chemical analysis of the insulators as reduced to oxides. On the basis of the thus-converted values, values were derived from the expression.
(4) Presence or absence of rare-earth-element-β-alumina crystal phase and mullite crystal phase: A cross section of each of the insulators was taken along a line orthogonal to the axis of each of the insulators. The organization of the insulator taken along the cross section was determined by means of X-ray diffraction, and a determination was made as to whether or not spectra corresponding to those defined in JCPDS card No. 33-699 or No. 15-776 exist. FIG. 3 shows an X-ray diffraction chart of sample No. 10 in which an Nd-β-alumina crystal phase (Al₁₁NdO₁₈) is present. FIG. 4 shows an X-ray diffraction chart of sample No. 8 in which a mullite crystal phase (SiAl₆O₂₃) is present. Even when a crystal phase exists in the insulator, a trace amount of crystal phase may not clearly appear in the spectrum obtained through X-ray diffraction. In such a case, the sample insulator was determined to have no crystal phase.
(5) Withstand Voltage of the Insulator at 700°C: This test employed test pieces which were made from base granules which .. are the same as those mentioned above. More specifically, base granules for molding were molded from a metal press mold (which applies a pressure of 100 MPa) and fired under the same conditions as those under which the insulators fired, whereby circular test pieces 20, each measuring 0.65 mm = Φ25 mm x t (thickness), were produced. As shown in FIG. 5, each of the pieces 20 was sandwiched between electrodes 21a and 21b and was fixed by alumina insulation tubes 22a and 22b and sealing glass 23. The interior of a heat box 25 was heated up to 700°C by means of an electric heater 24, and a predetermined high voltage was applied to the test piece 20 through use of a high-voltage generator (CDI power supply) 26 in order to apply a high voltage of about several tens of kilo-volts to the test piece 20. At this time, the withstand voltage of the test piece 20 was measured.
(6) Withstanding Voltage Test Performed While the Insulator was Formed into a Spark Plug: Spark plugs like that shown in. FIG. 1 were produced through use of the respective insulators. The diameter of the screw section of the main metal shell of each of the spark plugs of the present embodiment was set to 12 mm. The spark plugs were attached to a four-valve engine (having a displacement of 2000 cc). While the discharge voltage was controlled to 35 to 38 kV at a full throttle and an engine speed of 6000 r.p.m., the temperature of the tip end of the insulator (located in a lower area in FIG. 1) was set to about 700°C, and the engine was run continuously. After lapse of 50 hours, an evaluation was made as to whether or not a problem had arisen in the insulator. The insulators in which no problem was found are assigned circles (O), and the
insulators in which insulation breakdown (penetration of a spark) had occurred before lapse of 50 hours are assigned crosses (X).

**TABLE1**

| NUMBER OF ALUMINA POWDER | MEAN PARTICLE SIZE OF ALUMINA POWDER (µm) | Na₂O CONTENT (wt.%) |
|---|---|---|
| ① | 0.6 | 0.04 |
| ② | 1.7 | 0.31 |
| ③ | 2.2 | 0.02 |
| ④ | 0.3 | 0.01 |
| ⑤ | 0.1 | 0.001 |
| ⑥ | 1.5 | 0.06 |

**TABLE 2**

| RARE-EARTH OXIDES | MEAN PARTICLE SIZE (µm) |
|---|---|
| La₂O₃ | 1.0 |
| Pr₅O₁₁ | 1.0 |
| Nd₂O₃① | 1.0 |
| Dy₂O₃ | 1.5 |
| Er₂O₃ | 2.0 |
| Sc₂O₃ | 1.5 |
| Y₂O₃ | 3.5 |
| Nd₂O₃② | 9.3 |
| Nd₂O₃③ | 19.0 |

In the following Tables 3 and 4, Sample Nos. 1, 3, 6 to 8, 11, 14 and 17 to 21 are not covered by the present invention.

**TABLE 3**

| SAMPLE NO. | ALUMINA POWDER No. | FORMULATED COMPOSITION (PARTS-BY-WEIGHT) | | | | | FIRING TEMPERATURE (°C) |
|---|---|---|---|---|---|---|---|
| | | Al₂O₃ | MgO | CaCO₃ | SiO₂ | RARE-EARTH-OXIDE (PARTS-BY-WEIGHT) | |
| 1 | ① | 100 | 0 | 0 | 0 | La₂O₃ (4.00) | 1550 |
| 2 | ① | 100 | 0 | 0 | 0 | Nd₃O₂① (7.00) | 1550 |
| 3 | ⑥ | 100 | 0 | 0 | 0 | Y₂O₃ (0.20) | 1500 |
| 4 | ① | 92 | 0 | 3.572 | 6.00 | Pr₆O₁₁ (0.02) | 1500 |
| 5 | ① | 95 | 0.25 | 1.339 | 4.00 | Nd₂O₃① (0.02) | 1575 |
| 6 | ① | 95 | 0.25 | 0.893 | 4.25 | Dy₂O₃ (0.20) | 1550 |
| 7 | ① | 98 | 0 | 0.893 | 1.50 | Er₂O₃ (0.20) | 1600 |
| 8 | ① | 95 | 0.50 | 0.446 | 4.25 | Sc₂O₃ (0.20) | 1550 |
| 9 | ① | 95 | 0.25 | 1.339 | 4.00 | Nd₂O₃① (18.00) | 1500 |
| 10 | ① | 95 | 0.50 | 0.893 | 4.00 | Nd₂O₃ (5.00) | 1450 |
| 11 | ① | 95 | 0 | 2.232 | 3.75 | Dy₂O₃ (10.00) | 1475 |
| 12 | ① | 95 | 0.50 | 0.893 | 4.00 | La₂O₃ (1.00) Nd₂O₃① (1.00) | 1500 |
| 13 | ④ | 95 | 0.25 | 0.893 | 4.25 | Nd₂O₃① (3.50) | 1500 |
| 14 | ⑤ | 95 | 0.50 | 0.893 | 4.00 | Dy₂O₃ (4.00) | 1450 |
| 15 | ① | 95 | 0.75 | 0.446 | 4.00 | Nd₂O₃② (5.00) | 1575 |
| 16 | ① | 95 | 0.25 | 0.893 | 4.25 | Nd₂O₃③ (7.00) | 1575 |
| 17 | ① | 95 | 0.50 | 0.893 | 4.00 | Dy₂O₃ (23.00) | 1525 |
| *18 | ① | 95 | 3.50 | 0.893 | 1.00 | 0 | 1550 |
| *19 | ② | 95 | 1.00 | 0.893 | 3.50 | La₂O₃ (1.00) | 1575 |
| *20 | ② | 95 | 0.25 | 1.339 | 4.00 | Nd₂O₃① (5.00) | 1525 |
| *21 | ③ | 100 | 0 | 0 | 0 | Y₂O₃ (2.00) | 1500 |

| | | | | | | | |
|---|---|---|---|---|---|---|---|
| Note: Sample Nos. assigned symbol "*" represent comparative examples. | | | | | | | |

**TABLE 4**

| SAMPLE NO. | THEORETICAL DENSITY RATIO (%) | S/(S+ C+M) | ANALYZED VALUE (wt.%) | | CRYSTAL PHASE - | | WITHSTAND VOLTAGE (kV/mm) | WITHSTAND VOLTAGE WHEN SET IN PLUG | |
|---|---|---|---|---|---|---|---|---|---|
| | | | RARE EARTH OXIDES | Na₂O | RARE-ERTH-ELEMENT -β-ALUMINA | MULLITE | | 35 kV | 38 kV |
| 1 | 96.1 | 0 | La₂C₃ (3.83) | 0.02 | ○ | × | 63 | ○ | ○ |
| 2 | 96.3 | 0 | Nd₂O₃ (6.53) | 0.02 | ○ | × | 66 | ○ | ○ |
| 3 | 96.4 | 0 | Y₂O₃ (0.18) | 0.05 | × | × | 62 | ○ | ○ |
| 4 | 95.8 | 0.73 | Pr₆O₁₁ (0.02) | 0.03 | × | × | 70 | ○ | ○ |
| 5 | 95.9 | 0.78 | Nd₂O₃ (0.02) | 0.03 | × | ○ | 69 | ○ | ○ |
| 6 | 95.8 | 0.85 | Dy₂O₃ (0.19) | 0.03 | × | ○ | 72 | ○ | ○ |
| 7 | 95.4 | 0.76 | Er₂O₃ (0.20) | 0.02 | × | ○ | 70 | ○ | ○ |
| 8 | 95.6 | 0.86 | Sc₂O₃ (0.20) | 0.03 | × | ○ | 71 | ○ | ○ |
| 9 | 95.8 | 0.79 | Nd₂O₂ (15.24) | 0.02 | ○ | × | 75 | ○ | ○ |
| 10 | 96.2 | 0.80 | Nd₂O₃ (4.74) | 0.01 | ○ | × | 78 | ○ | ○ |
| 11 | 95.6 | 0.74 | Dy₂O₃ (9.08) | 0.03 | × | × | 72 | ○ | ○ |
| 12 | 96.4 | 0.81 | La₂O₃ (0.98) Nd₂O₃ (0.97) | 0.02 | × | × | 75 | ○ | ○ |
| 13 | 98.0 | 0.83 | Nd₂O₂ (3.36) | 0.002 | ○ | × | 80 | ○ | ○ |
| 14 | 98.5 | 0.80 | Dy₂O₃ (3.84) | 0.0007 | × | × | 82 | ○ | ○ |
| 15 | 95.4 | 0.80 | Nd₂O₃ (4.74) | 0.02 | ○ | × | 80 | ○ | ○ |
| 16 | 95.7 | 0.80 | Nd₂O₃ (6.53) | 0.02 | ○ | × | 78 | ○ | ○ |
| 17 | 97.7 | 0.80 | Dy₂O₃ (18.70) | 0.02 | × | × | 61 | ○ | ○ |
| -18 | 96.2 | 0.21 | 0 | 0.02 | × | × | 47 | ○ | × |
| *19 | 96.1 | 0.70 | La₂O₃ (0.98) | 0.25 | × | × | 36 | ○ | × |
| *20 | 96.0 | 0.79 | Nd₂O₃ (4.74) | 0.27 | ○ | × | 41 | × | × |
| *21 | 93.0 | 0 | Y₂O₃ (1.95) | 0.02 | × | × | 32 | × | × |

| | | | | | | | | | |
|---|---|---|---|---|---|---|---|---|---|
| Note: Sample Nos. assigned symbol "*" represent comparative examples. | | | | | | | | | |

As can be seen from the test results provided in Table 4, the insulators of sample Nos. 4 to 17 contain 0.05 wt.% sodium as reduced to oxides (i.e., the amount of Na₂O contained in the insulator is 0.05 wt.%), show a value of 0.7 or more with regard to the expression S/(S+C+M), and contain rare earth elements. Further, the theoretical density ratio of each of these samples is 95% or more. These samples show excellent withstand voltages of 60 kV/mm or more at 700°C. Sample Nos. 1 to 3 show a value of 0 with regard to the expression S/(S+C+M), contain in the insulator 0.05 wt.% sodium as reduced to oxides, contain rare earth elements, and show a theoretical density ratio of 95% or more. Even these samples show excellent withstand voltages of 60 kV/mm or more at 700°C.

Samples Nos. 9, 10, 12, 13, 14, 15, and 16 contain in the insulator 0.02 wt.% sodium as reduced to oxides and 1.95 to 15.24 wt.% rare earth elements as reduced to oxides, satisfy the expression S/(S+C+M)≥0.7, and show a theoretical density ratio of 95.4% or more. These samples also exhibit very good withstand voltages; namely, sample No. 9 shows a withstand voltage of 75 kV/mm; No. 10 shows a withstand voltage of 78 kV/mm; No. 12 shows a withstand voltage of 75 kv/mm; No. 13 shows a withstand voltage of 80 kV/mm; No. 14 shows a withstand voltage of 82 kV/mm; No. 15 shows a withstand voltage of 80 kV/mm; and No. 16 shows a withstand voltage of 78 kV/mm.

Sample No. 18, which does not contain any rare earth elements in the insulator show an unfavorable withstand voltage of 47 kV/mm at 700°C. Sample Nos. 19 and 20, which contain in the insulator 0.25 wt.% or more sodium as reduced to oxides, show unfavorable withstand voltages of 36 kv/mm and 41 kV/mm, respectively. Further, sample No. 21, whose rare earth element content as reduced to oxides falls within a predetermined range and whose Na content as reduced to oxides is set so as to become less than a predetermined amount, has a theoretical density ratio of 93.0%. Sample No. 21 shows the worst withstand voltage of 32 kV/mm at 700°C. Thus, it is understood that the withstand voltage of the insulator is not improved if the theoretical density ratio is lower than 95.0%.

### Example 2

Of the alumina (Al₂O₃) powders provided in Table 5 (all of which are more than 99.8% pure), one type of alumina powder was selected from alumina powders No. 7 through No. 11 whose mean particle size range from-0.1 to 2.2 µm. The thus-selected alumina powder was doped with SiO₂ powder (which is more than 99.9% pure) having a mean particle size of 0.6 µm, CaCO₃ powder (which is more than 99.9% pure) having a mean particle size of 0.8 µm, and MgO powder (which is more than 99.9% pure) having a mean particle size of 0.3 µm. Rare-earth-element oxides (rare-earth-element-based powder) having a mean particle size of 1.0 to 19.0 µm as provided in Table 2 (see, Example 1) were weighed so as to assume the proportions provided in Table 6. The mixture was further doped with the thus-weighed rare-earth-element-based oxides, thereby preparing a raw material powder. The rare-earth-element-based oxides were formulated with reference to the total amount of alumina, SiO₂, CaCO₃, and MgO powders to be doped, and was added to the mixture.

Provided that the total amount of raw material powder is taken as 100 parts by weight, 2 parts-by-weight of PVA serving as a hydrophilic binder and 70 parts-by-weight of water serving as a solvent were formulated. The PVA and water were mixed with the raw material powder within a bowl of alumina by means of wet mixing, thereby preparing a raw slurry for molding. The thus-prepared raw slurry was sprayed and dried by means of the spray-dry method, thereby preparing spherical base granules. The base granules were sieved to granules having a particle size of 10 to 355 µm. The thus-sieved base granules were charged into a rubber press mold, and a rubber press pin for creating the through hole 6 was inserted into the press mold. In this state, the base granules were subjected to rubber press molding at a pressure of about 100 MPa. The outside of the press-molded body was ground and machined through use of resinoid bonded into a molded body having the shape of a predetermined insulator. Subsequently, the molded body was retained and fired in the atmosphere at a firing temperature provided in Table 6 (the maximum firing temperature to be retained). The thus-fired molded body was coated with glaze and subjected to final firing, whereby the insulator 2 shown in FIG. 2A was manufactured.

The insulator thus fired was subjected to the tests and analysis of (1) theoretical density ratio; (2) the content of rare earth elements in the insulator as reduced to oxides; (3) a value derived from the previously-described expression S/(S+C+M); (4) presence/absence within the insulator of a crystal phase having an rare earth element-β-alumina structure and a mullite crystal phase; (5) a withstand voltage of the insulator at a temperature of 700°C; and (6) a withstand voltage test conducted while the insulator is formed into a spark plug as in the same manner described in Example 1. The test results are shown in Table 7.

**TABLE 5**

| NUMBER OF ALUMINA POWDER | MEAN PARTICLE SIZE OF ALUMINA POWDER (µm) | Na₂O content |
|---|---|---|
| ⑦ | 0.6 | <0.07 |
| ⑧ | 1.7 | <0.07 |
| ⑨ | 2.2 | <0.07 |
| ⑩ | 0.3 | <0.07 |
| ⑪ | 0.1 | <0.07 |

In the following Tables 6 and 7, Sample Nos. 23, 26 to 29, 32, 35 and 38 to 41 are not covered by the present invention.

**TABLE 6**

| SAMPLE NO. | ALUMINA POWDER No. | FORMULATED COMPOSITION (PARTS-BY-WEIGHT) | | | | | FIRING TEMPERATURE x HOLDING TIME (°Cx h) |
|---|---|---|---|---|---|---|---|
| | | Al₂O₃ | MgO | CaCO₃ | SiO₂ | RARE-EARTH-OXIDE (PARTS-BY-WEIGHT) | |
| 22 | ⑧ | 95 | 0 | 0 | 5.05 | Nd₂O₃① (5.00) | 1550x5 |
| 23 | ⑧ | 95 | 0.50 | 0.446 | 4.25 | Y₂O₃ (0.50) | 1575x1 |
| 24 | ⑦ | 92 | 0 | 3.572 | 6.00 | Pr₆O₁₁ (0.02) | 1500x5 |
| 25 | ⑦ | 95 | 0.25 | 1.339 | 4.00 | Nd₂O₃① (0.02) | 1575x2 |
| 26 | ⑦ | 95 | 0.25 | 0.893 | 4.25 | Dy₂O₃ (0.20) | 1550x4 |
| 27 | ⑦ | 95 | 0.25 | 1.339 | 4.00 | La₂O₃ (0.02) | 1575x2 |
| 28 | ⑦ | 98 | 0 | 0.893 | 1.50 | Er₂O₃ (0.20) | 1600x4 |
| 29 | ⑦ | 95 | 0.50 | 0.446 | 4.25 | Sc₂O₃ (0.20) | 1550x2 |
| 30 | ⑦ | 95 | 0.25 | 1.339 | 4.00 | Nd₂O₃① (18.00) | 1500x2 |
| 31 | ⑦ | 95 | 0.50 | 0.893 | 4.00 | Nd₂O₃① (5.00) | 1450x2 |
| 32 | ⑦ | 95 | 0 | 2.232 | 3.75 | Dy₂O₃ (10.00) | 1475x4 |
| 33 | ⑦ | 95 | 0.50 | 0.893 | 4.00 | La₂O₃ (1.00) Nd₂O₃① (1.00) | 1500x2 |
| 34 | ⑩ | 95 | 0.25 | 0.893 | 4.25 | Nd₂O₃① (3.50) | 1500x2 |
| 35 | ⑪ | 95 | 0.50 | 0.893 | 4.00 | Dy₂O₃ (4.00) | 1450x8 |
| 36 | ⑦ | 95 | 0.75 | 0.446 | 4.00 | Nd₂O₃② (5.00) | 1575x2 |
| 37 | ⑦ | 95 | 0.25 | 0.893 | 4.25 | Nd₂O₃③ (7.00) | 1575x2 |
| 38 | ⑦ | 95 | 0.50 | 0.893 | 4.00 | Dy₂O₃ (23.00) | 1525x2 |
| *39 | ⑦ | 95 | 3.50 | 0.893 | 1.00 | 0 | 1550x2 |
| *40 | ⑧ | 95 | 0 | 2.232 | 3.75 | Dy₂O₃ (5.00) | 1400x0.5 |
| *41 | ⑧ | 100 | 0 | 0 | 0 | Y₂O₃ (2.00) | 1500x0.5 |

| | | | | | | | |
|---|---|---|---|---|---|---|---|
| Note: Sample Nos. assigned symbol "*" represent comparative examples. | | | | | | | |

**TABLE 7**

| SAMPLE NO. | THEORETICAL DENSITY RATIO (%) | S/(S +C+M ) | ANALYZED VALUE (wt.%) | CRYSTAL PHASE | | HITBSTAND VOLTAGE (Kv/mm) | HITBSTAND VOLTAGE WHEN SET IN PLUG | |
|---|---|---|---|---|---|---|---|---|
| | | | RAZE EARTH OXIDES | RARE-EARTH-ELEMENT-β-ALUMINA | MULLITE | | 35kV | 38kV |
| 22 | 96.1 | 1 | Nd₂O₃ (4.74) | ○ | × | 64 | ○ | ○ |
| 23 | 95.8 a | 0.85 | Y₂O₃ (0.49) | × | ○ | 63 | ○ | ○ |
| 24 | 95.8 | 0.73 | Pr₆O₁₁ (0.02) | × | × | 70 | ○ | ○ |
| 25 | 95.9 | 0.78 | Nd₂O₃ (0.02) | × | ○ | 69 | ○ | ○ |
| 26 | 95.8 | 0.85 | Dy₂O₃ (0.19) | × | ○ | 72 | ○ | ○ |
| 27 | 95.5 | 0.78 | La₂O₂ (0.02) | × | ○ | 67 | ○ | ○ |
| 28 | 95.4 | 0.76 | Er₂O₃ (0.19) | × | ○ | 70 | ○ | ○ |
| 29 | 95.6 | 0.86 | Sc₂O₃ (0.20) | × | ○ | 71 | ○ | ○ |
| 30 | 95.8 | 0.79 | Nd₂O₃ (15.24) | ○ | × | 75 | ○ | ○ |
| 31 | 96.2 | 0.80 | Nd₂O₃ (4.74) | ○ | × | 78 | ○ | ○ |
| 32 | 95.6 | 0.74 | Dy₂O₃ (9.08) | × | × | 72 | ○ | ○ |
| 33 | 96.4 | 0.81 | La₂O₃ (0.98) Nd₂O₃ (0.97) | × | × | 75 | ○ | ○ |
| 34 | 98.0 | 0.83 | Nd₂O₃ (3.36) | ○ | × | 80 | ○ | ○ |
| 35 | 98.5 | 0.80 | Dy₂O₃ (3.84) | -× | × | 82 | ○ | ○ |
| 36 | 95.4 | 0.80 | Nd₂O₃ (4.74) | ○ | × | 80 | ○ | ○ |
| 37 | 95.7 | 0.80 | Nd₂O₃ (6.53) | ○ | × | 78 | ○ | ○ |
| 38 | 97.7 | 0.80 | Dy₂O₃ (18.70) | × | × | 61 | ○ | ○ |
| *39 | 96.2 | 0.21 | 0 | × | × | 47 | ○ | × |
| *40 | 94.3 | 0.75 | Dy₂O₃ (4.98) | × | × | 43 | × | × |
| *41 | 93.0 | 0 | Y₂O₃ (1.95) | × | × | 32 | × | × |

| | | | | | | | | |
|---|---|---|---|---|---|---|---|---|
| Note: Sample Nos. assigned symbol "*" represent comparative examples. | | | | | | | | |

As can be seen from the test results provided in Table 7, the insulators of sample Nos. 22 to 38 show a value of 0.7 or more with regard to the expression S/(S+C+M), contain rare earth elements, and exhibits a theoretical density ratio of 95% or more. These samples show excellent withstand voltages of 60 kV/mm or more at 700°C. Further, it is understood that the tests performed while the insulators were attached to the engine show excellent results in both of conditions: a discharge voltage of 35 kV and a discharge voltage of 37 kV. Of these test results, the samples, which contain rare earth elements in amount of 0.01 to 18 wt.%, exhibit excellent withstand voltages at a temperature of 700°C.

Sample No. 39, which does not contain any rare earth elements in the insulator show an unfavorable withstand voltage of 47 kV/mm at 700°C. Sample Nos. 40 and 41, which contain rare earth elements in an amount as reduced to oxides within the predetermined range but show a theoretical density ratio of 95.0% or less, show unfavorable withstand voltages of 43 kV/mm and 32 kV/mm at a temperature of 700°C, respectively. Thus, it is understood that the withstand voltage of the insulator is not improved if the theoretical density ratio is lower than 95.0%.

### Example 3

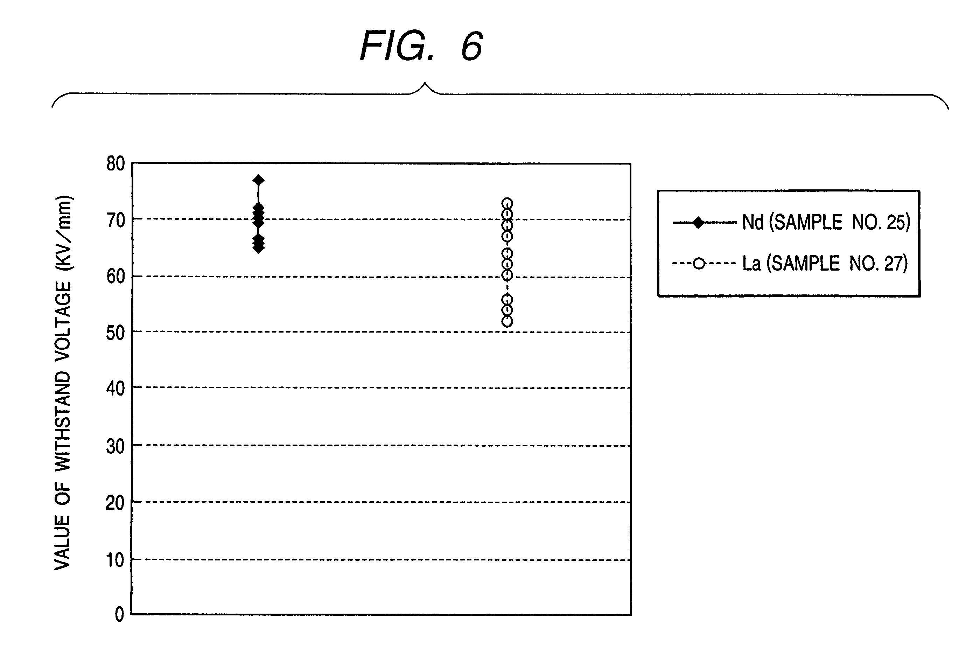

With regard to sample Nos. 25 and 27 used in Example 2, ten test pieces for use in a withstand voltage test were prepared according to the same method as that employed in Example 2. Each of the thus-prepared test pieces was subjected to measurement of a withstand voltage at 700°C in the same manner as is in Example 2. The test results relating to sample Nos.25 and 27 were plotted in FIG. 6.

As can be seen from the tests results provided in FIG. 6, the mean withstand voltage of the ten test pieces of sample No. 25 that contains Nd and the mean withstand voltage of the ten test pieces of sample No. 27 that contains La show excellent values of more than 60 kV/mm at 700°C. The mean withstand voltage of the Nd-containing samples has fewer variations than those arising in the mean withstand voltage of the La-containing samples. Further, all the ten test pieces of the Nd-containing samples exhibit a withstand voltage of 60 kV/mm. From this example, it is understood that the maximum and minimum withstand voltages of the Nd-containing samples are higher than those of the La-containing samples. Therefore, it is said that, even when an Nd-containing samples are mass-produced, insulators having superior withstand voltage characteristics at a high temperature of 700°C can be reliably produced.

## Claims

1. Spark plug having an insulator (2) comprising an alumina (Al₂O₃)-based sintered body containing at least one rare-earth element and 0.05 wt.% or less of sodium (Na) as reduced to oxides;
wherein the alumina-based sintered body has a theoretical density ratio of 95% or more and the rare-earth element comprises praseodymium (Pr) and/or neodymium (Nd).

2. Spark plug according to claim 1, wherein the alumina-based sintered body contains 0.01 to 18 wt.% of the rare-earth element as reduced to oxides.

3. Spark plug according to claim 1 or 2, wherein the rare-earth element further comprises lanthanum (La) and has at least a crystal phase of rare-earth-element-β-alumina (composition formula: rare-earth element Al₁₁O₁₈) structure.

4. Spark plug according to any one of claims 1 to 3, wherein the alumina-based sintered body further contains silicon (Si) and at least one of calcium (Ca) and magnesium (Mg);
wherein, provided that the silicon content is taken as S (unit: wt.%) as reduced to oxides, the calcium content is taken as C (unit: wt.%) as reduced to oxides and the magnesium content is taken as M (unit: wt.%) as reduced to oxides, the expression S / (S+C+M) ≥ 0.7 is satisfied.

5. Spark plug according to claim 4, wherein the expression of 0.95 ≥ S / (S+C+M) ≥ 0.75 is satisfied.

6. Spark plug according to claim 5, wherein the expression 0.92 ≥ S / (S+C+M) ≥ 0.78 is satisfied.

7. Spark plug according to any one of claims 4 to 6, wherein at least a mullite (Al₆Si₂O₁₃) crystal phase is present.

8. Spark plug having an insulator (2) comprising an alumina (Al₂O₃)-based sintered body containing silicon (Si) and at least one rare-earth element;
wherein the alumina-based sintered body has a theoretical density ratio of more than 95% and the rare-earth element comprises praseodymium (Pr) and/or neodymium (Nd).

9. Spark plug according to claim 8, wherein the alumina-based sintered body contains 0.01 to 18 wt.% of the rare-earth element as reduced to oxides.

10. Spark plug according to claim 8 or 9, wherein the alumina-based sintered body further contains at least one of calcium (Ca) and magnesium (Mg); and
wherein, provided that the silicon content is taken as S (unit: wt.%) as reduced to oxides, the calcium content is taken as C (unit: wt.%) as reduced to oxides, and the magnesium content is taken as M (unit: wt.%) as reduced to oxides, the expression S / (S+C+M) ≥ 0.7 is satisfied

11. Spark plug according to claim 10, wherein the expression 0.95 ≥ S / (S+C+M) ≥ 0.75 is satisfied.

12. Spark plug according to claim 11, where the expression 0.92 ≥ S / (S+C+M) ≥ 0.78 is satisfied.

13. Spark plug according to any one of claims 10 to 12, wherein at least a mullite (Al₆Si₂O₁₃) crystal phase is present.

14. Spark plug according to any one of claims 8 to 13, wherein the alumina-based sintered body has a crystal phase of rare-earth-element-β-alumina (composition formula: rare-earth-element Al₁₁O₁₈) structure.

15. Method of manufacturing an insulator (2) for a spark plug comprising the steps of:
preparing a raw material powder by mixing silicon compound powder and at least one rare-earth-element powder comprising praseodymium (Pr) and/or neodymium (Nd) into alumina powder serving as the major constituent of the insulator;
forming, from the raw material powder, a molded body having the shape of a predetermined insulator; and
sintering the molded body in the atmosphere at a temperature of 1450 to 1650°C for 1 to 8 hours.

16. Spark plug according to any one of claims 1 to 15, comprising:
a center electrode (3) extending so as to form an axis;
a main metal fitting provided around the center electrode (3) in the radial direction; and
a ground electrode(5) whose one end is fixed to the main metal fitting and which is arranged so as to face the center electrode (3).

## Patentansprüche

1. Zündkerze mit einem Isolator (2), der einen Sinterkörper auf Basis von Aluminiumoxid (Al₂O₃) umfasst, der wenigstens ein Seltenerdelement und 0,05 Gew.-% oder weniger Natrium (Na), reduziert auf Oxide, enthält,
wobei der Sinterkörper auf Basis von Aluminiumoxid ein theoretisches Dichteverhältnis von 95 % oder mehr hat und das Seltenerdelement Praseodym (Pr) und/oder Neodym (Nd) umfasst.

2. Zündkerze nach Anspruch 1, wobei der Sinterkörper auf Basis von Aluminiumoxid 0,01 bis 18 Gew.-% des Seltenerdelementes, reduziert auf Oxide, enthält.

3. Zündkerze nach Anspruch 1 oder 2, wobei das Seltenerdelement des Weiteren Lanthan (La) umfasst und wenigstens eine Kristallphase einer Struktur aus Seltenerdelement-β-Aluminiumoxid (Verbindungsformel: Seltenerdelement-Al₁₁O₁₈) hat.

4. Zündkerze nach einem der Ansprüche 1 bis 3, wobei der Sinterkörper auf Basis von Aluminiumoxid des Weiteren Silizium (Si) und Kalzium (Ca) oder/und Magnesium (Mg) enthält;
wobei, wenn der Siliziumgehalt als S (Einheit: Gew.-%), reduziert auf Oxide, angenommen wird, der Kalziumgehalt als C (Einheit: Gew.-%), reduziert auf Oxide, angenommen wird und der Magnesiumgehalt als M (Einheit: Gew.-%), reduziert auf Oxide, angenommen wird, der Ausdruck S / (S+C+M) ≥ 0,7 gilt.

5. Zündkerze nach Anspruch 4, wobei der Ausdruck 0,95 ≥ S / (S+C+M) ≥ 0,75 gilt.

6. Zündkerze nach Anspruch 5, wobei der Ausdruck 0,92 ≥ S / (S+C+M) ≥ 0,78 gilt.

7. Zündkerze nach einem der Ansprüche 4 bis 6, wobei wenigstens eine Kristallphase aus Mullit (Al₆Si₂O₁₃) vorhanden ist.

8. Zündkerze mit einem Isolator (2), der einen Sinterkörper auf Basis von Aluminiumoxid (Al₂O₃) umfasst, der Silizium (Si) und wenigstens ein Seltenerdelement enthält;
wobei der Sinterkörper auf Basis von Aluminiumoxid ein theoretisches Dichteverhältnis von 95 % oder mehr hat und das Seltenerdelement Praseodym (Pr) und/oder Neodym (Nd) umfasst.

9. Zündkerze nach Anspruch 8, wobei der Sinterkörper auf Basis von Aluminiumoxid 0,01 bis 18 Gew.-% des Seltenerdelementes, reduziert auf Oxide, enthält.

10. Zündkerze nach Anspruch 8 oder 9, wobei der Sinterkörper auf Basis von Aluminiumoxid des Weiteren Kalzium (Ca) oder/und Magnesium (Mg) enthält; und
wobei, wenn der Siliziumgehalt als S (Einheit: Gew.-%), reduziert auf Oxide, angenommen wird, der Kalziumgehalt als C (Einheit: Gew.-%), reduziert auf Oxide, angenommen wird und der Magnesiumgehalt als M (Einheit: Gew.-%), reduziert auf Oxide, angenommen wird, der Ausdruck S / (S+C+M) ≥ 0,7 gilt.

11. Zündkerze nach Anspruch 10, wobei der Ausdruck 0,95 ≥ S / (S+C+M) ≥ 0,75 gilt.

12. Zündkerze nach Anspruch 11, wobei der Ausdruck 0,92 ≥ S / (S+C+M) ≥ 0,78 gilt.

13. Zündkerze nach einem der Ansprüche 10 bis 12, wobei wenigstens eine Kristallphase aus Mullit (Al₆Si₂O₁₃) vorhanden ist.

14. Zündkerze nach einem der Ansprüche 8 bis 13, wobei der Sinterkörper auf Basis von Aluminiumoxid eine Kristallphase einer Struktur aus Seltenerdelement-β-Aluminiumoxid (Verbindungsformel: Seltenerdelement-Al₁₁O₁₈) hat.

15. Verfahren zum Herstellen eines Isolators (2) für eine Zündkerze, das die folgenden Schritte umfasst:
Fertigen eines Ausgangsmaterial-Pulvers durch Beimischen von Siliziumverbindungs-Pulver und wenigstens eines Seltenerdelement-Pulvers, das Praseodym (Pr) und/oder Neodym (Nd) umfasst, zu Aluminiumoxid-Pulver, das als der Hauptbestandteil des Isolators dient;
Ausbilden eines geformten Körpers, der die Form eines vorgegebenen Isolators hat, aus dem Ausgangsmaterial-Pulver; und
Sintern des geformten Körpers in der Atmosphäre bei einer Temperatur von 1450 bis 1650 °C über 1 bis 8 Stunde/n.

16. Zündkerze nach einem der Ansprüche 1 bis 15, die umfasst:
eine Mittelelektrode (3), die sich so erstreckt, dass sie eine Achse bildet;
ein Haupt-Passteil aus Metall, das in der radialen Richtung um die Mittelelektrode (3) herum vorhanden ist; und
eine Masseelektrode (5), deren eines Ende an dem Haupt-Passteil aus Metall befestigt ist und die so angeordnet ist, dass sie der Mittelelektrode (3) zugewandt ist.

## Revendications

1. Bougie d'allumage comprenant un isolant (2) comprenant un corps fritté à base d'alumine (Al₂O₃) contenant au moins un élément de terres rares et 0,05 % en poids ou moins de sodium (Na) comme réduit en oxydes,
dans laquelle le corps fritté à base d'alumine présente un taux de densité théorique de 95 % ou supérieur et l'élément de terres rares comprend du praséodyme (Pr) et/ou du néodyme (Nd).

2. Bougie d'allumage selon la revendication 1, dans laquelle le corps fritté à base d'alumine contient de 0,01 à 18 % en poids de l'élément de terres rares comme réduit en oxydes.

3. Bougie d'allumage selon la revendication 1 ou 2, dans laquelle l'élément de terres rares comprend de plus du lanthane (La) et présente au moins une phase cristalline de structure d'élément de terres rares-alumine-β (formule de composition : élément de terres rares Al₁₁O₁₈).

4. Bougie d'allumage selon l'une quelconque des revendications 1 à 3, dans laquelle le corps fritté à base d'alumine contient en plus du silicium (Si) et au moins un parmi le calcium (Ca) et le magnésium (Mg) ;
dans laquelle, à condition que la teneur en silicium est définie par S (unité : % en poids) comme réduit en oxydes, la teneur en calcium est définie par C (unité : % en poids) comme réduit en oxydes et la teneur en magnésium est définie par M (unité : % en poids) comme réduit en oxydes, l'expression S/(S+C+M) ≥ 0,7 est satisfaite.

5. Bougie d'allumage selon la revendication 4, dans laquelle l'expression de 0,95 ≥ S/(S+C+M) ≥ 0,75 est satisfaite.

6. Bougie d'allumage selon la revendication 5, dans laquelle l'expression 0,92 ≥ S/(S+C+M) ≥ 0,78 est satisfaite.

7. Bougie d'allumage selon l'une quelconque des revendications 4 à 6, dans laquelle au moins une phase cristalline de mullite (Al₆Si₂O₁₃) est présente.

8. Bougie d'allumage présentant un isolant (2) comprenant un corps fritté à base d'alumine (Al₂O₃) contenant du silicium (Si) et au moins un élément de terres rares,
dans laquelle le corps fritté à base d'alumine présente un taux de densité théorique supérieur à 95 % et l'élément de terres rares comprend du praséodyme (Pr) et/ou du néodyme (Nd).

9. Bougie d'allumage selon la revendication 8, dans laquelle le corps fritté à base d'alumine contient de 0,01 à 18 % en poids de l'élément de terres rares comme réduit en oxydes.

10. Bougie d'allumage selon la revendication 8 ou 9, dans laquelle le corps fritté à base d'alumine contient en plus au moins un parmi le calcium (Ca) et le magnésium (Mg) ; et
dans laquelle, à condition que la teneur en silicium est définie par S (unité : % en poids) comme réduit en oxydes, la teneur en calcium est définie par par C (unité : % en poids) comme réduit en oxydes et la teneur en magnésium est définie par M (unité : % en poids) comme réduit en oxydes, l'expression S/(S+C+M) ≥ 0,7 est satisfaite.

11. Bougie d'allumage selon la revendication 10, dans laquelle l'expression 0,95 ≥ S/(S+C+M) ≥ 0,75 est satisfaite.

12. Bougie d'allumage selon la revendication 11, dans laquelle l'expression 0,92 ≥ S/(S+C+M) ≥ 0,78 est satisfaite.

13. Bougie d'allumage selon l'une quelconque des revendications 10 à 12, dans laquelle au moins une phase cristalline de mullite (Al₆Si₂O₁₃) est présente.

14. Bougie d'allumage selon l'une quelconque des revendications 8 à 13, dans laquelle le corps fritté à base d'alumine présente une phase cristalline de structure d'élément de terres rares-alumine-β (formule de composition : élément de terres rares Al₁₁O₁₈).

15. Procédé de fabrication d'un isolant (2) pour une bougie d'allumage comprenant les étapes consistant :
à préparer une poudre de matière brute en mélangeant une poudre de composé de silicium et au moins une poudre d'élément de terres rares comprenant du praséodyme (Pr) et/ou du néodyme (Nd) dans une poudre d'alumine servant de constituant principal de l'isolant ;
à former, à partir de la poudre de matière brute, un corps moulé présentant la forme d'un isolant prédéterminé ; et
à fritter le corps moulé dans l'atmosphère à une température de 1 450 à 1 650°C pendant de 1 à 8 heures.

16. Bougie d'allumage selon l'une quelconque des revendications 1 à 15 comprenant :
une électrode centrale (3) qui s'étend pour former un axe ;
un adaptateur principal en métal fourni autour de l'électrode centrale (3) dans la direction radiale ; et
une électrode de terre (5) dont une extrémité est fixée à l'adaptateur principal en métal et qui est disposée pour faire face à l'électrode centrale (3).
